# FASCICULE DE BREVET EUROPEEN

(11) **EP 3 832 404 B1**
(45) Date de publication et mention de la délivrance du brevet: **01.10.2025**
(21) Numéro de dépôt: 19214105.9
(22) Date de dépôt: 06.12.2019
(51) Int. Cl.: G04G 21/02, G06F 21/32, G06F 21/62

(54) **PROCÉDÉ DE GESTION DE L'UTILISATION DES FONCTIONS D'UNE MONTRE**
STEUERUNGSVERFAHREN DER FUNKTIONSANWENDUNGEN EINER ARMBANDUHR
METHOD FOR MANAGING USE OF THE FUNCTIONS OF A WATCH

(43) Date de publication de la demande: 09.06.2021
(73) Titulaire: Tissot S.A., 2400 Le Locle (CH)
(72) Inventeur: FRANZI, Edoardo, 1400 Cheseaux-Noréaz (CH)
(74) Mandataire: ICB SA

(56) Documents cités:
- WO-A1-2018/202952
- KR-A- 20170 001 219
- US-A1- 2015 242 605
- US-A1- 2016 109 861
- US-B1- 6 720 860

## Description

### Domaine technique

La présente invention concerne un procédé de gestion de l'utilisation des fonctions d'une montre et un système mettant en œuvre un tel procédé.

L'invention concerne également une montre comprenant un tel système ainsi qu'un programme d'ordinateur.

### Art antérieur

Une montre comprend un ensemble de fonctions qui peut être utilisé par le porteur. De telles fonctions peuvent concerner en plus du réglage de l'heure ou de la date, une utilisation de données confidentielles ou privées propres au porteur et utiles pour accéder à des services personnalisés. Ces données sont par exemple des clés, certificats, codes d'authentification, mots de passe et codes personnels qui permettent de réaliser une connexion sécurisée de la montre à un réseau privé d'une entreprise, une authentification auprès de serveurs sécurisés comme un serveur bancaire, ou une messagerie sécurisée pour l'envoi et la réception de courriels signés et/ou chiffrés. Dès lors, on comprend alors qu'il est important de pouvoir sécuriser l'accès à l'utilisation des fonctions d'une telle montre.

Pour ce faire, on connait dans l'état de la technique des procédés prévoyant de gérer l'utilisation des fonctions d'une montre en renforçant les critères d'authentification autorisant/interdisant cette utilisation par exemple en mettant en œuvre des étapes supplémentaires d'authentification.

Toutefois un des inconvénients majeurs de tels procédés est lié au fait qu'une fois que le porteur de la montre est authentifié il est alors possible à n'importe quel individu d'avoir accès aux fonctions de la montre notamment dans le cas où cette dernière a été Le document US 2015/242605 A1 décrit un procédé de gestion de l'utilisation des fonctions d'une montre comportant une étape d'authentification du porteur de la montre en vue d'autoriser un accès audites fonctions et comportant également une étape de contrôle de l'identité du porteur de la montre par une vérification de la validité d'un élément d'identification numérique déterminé à partir d'au moins un élément d'information biométrique du porteur de ladite montre en vue de conserver l'accès audites fonctions.

On comprend qu'il existe un besoin de trouver une solution alternative, notamment qui ne présente pas les inconvénients de l'art antérieur.

### Résumé de l'invention

Un but de la présente invention est par conséquent de proposer un procédé de gestion de l'utilisation des fonctions d'une montre qui soit fiable et robuste.

Un tel procédé a pour avantage de s'assurer de l'identité du porteur de la montre de manière automatique, transparente et non intrusive pour le porteur.

Dans ce dessein, l'invention concerne un procédé de gestion de l'utilisation des fonctions d'une montre selon la revendication 1.

Dans d'autres modes de réalisation :
- la sous-étape de sélection comprend une phase de visualisation d'au moins une desdites portions d'identification de la séquence dans ladite représentation graphique ;
- la phase de visualisation comprend une sous-phase de présélection d'au moins une zone d'intérêt de la représentation graphique susceptible de comprendre ladite au moins une portion d'identification ;
- la sous-étape de validation comprend une phase de comparaison entre ladite séquence sélectionnée et une séquence de référence ;
- l'étape de contrôle comprend une sous-étape de génération d'un élément d'identification numérique à partir dudit au moins un élément d'information biométrique ;
- l'étape de contrôle comprend une sous-étape de validation d'un élément d'identification numérique généré en prévision du contrôle de l'identité du porteur ;
- la sous-étape de validation comprend une phase de comparaison comportant une sous-phase de conservation de l'autorisation d'accès audites fonctions de la montre si l'élément d'identification numérique généré est sensiblement similaire ou similaire à un élément d'identification numérique de référence ;
- la sous-étape d'acquisition comprend une phase d'éclairage de la portion de peau selon différentes longueurs d'onde ;
- la sous-étape d'acquisition comprend une phase de capture d'images de la portion de peau éclairée à différentes longueurs d'onde ;
- la sous-étape de génération comprend une phase de caractérisation dudit au moins un élément d'information biométrique compris dans les images acquises relatives à ladite portion de peau ;
- la sous-étape de génération comprend une phase de conception de l'élément d'identification numérique à partir de la caractérisation dudit élément d'information biométrique ;
- l'élément d'information biométrique est relatif à un réseau vasculaire ou à une texture de cette peau.

L'invention concerne aussi un système de gestion de l'utilisation des fonctions d'une montre mettant en œuvre ce procédé, le système comprenant les éléments suivants reliés entre eux : une unité de traitement, un capteur biométrique multispectral de peau, une interface de saisie et une interface de diffusion d'une information visuelle.

L'invention concerne aussi une montre, notamment une montre mécanique connectée, comportant un tel système.

L'invention concerne aussi un programme d'ordinateur comprenant des instructions de code de programme pour l'exécution des étapes de ce procédé lorsque ledit programme est exécuté par l'unité de traitement dudit système de gestion dans la montre.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'une montre comprenant un système de gestion de l'utilisation des fonctions d'une montre, selon un mode de réalisation de l'invention, et
- la figure 2 est un logigramme relatif à un procédé de gestion de l'utilisation des fonctions de la montre, selon le mode de réalisation de l'invention.

### Description détaillée de l'invention

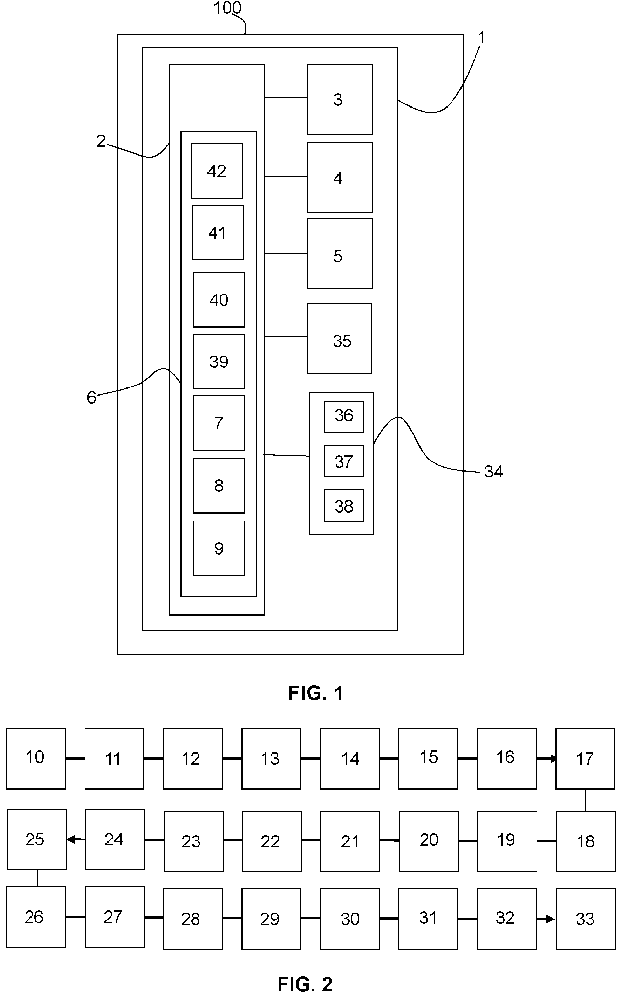

Sur la figure 1 est représenté une montre 100 comprenant un système de gestion de l'utilisation des fonctions de cette montre 100. Un tel système 1 est compris dans la montre 100 qui est de préférence une montre 100 mécanique connecté à affichage hybride. Dans ce contexte, ce dispositif électronique 100 comprend un corps tel que la boîte de montre, et un élément d'attache tel qu'un bracelet permettant de fixer ce corps par exemple au poignet du porteur. Ce système 1 comprend plus précisément de manière non limitative et/ou non exhaustive :
- une unité de traitement 2 comportant des ressources matérielles et logicielles en particulier au moins un processeur coopérant avec des éléments de mémoire 6;
- une interface de diffusion d'une information visuelle 3 telle qu'un cadran d'affichage hybride pourvu d'une première composante d'affichage analogique et d'une deuxième composante d'affichage numérique et/ou alphanumérique ;
- une interface de diffusion d'une information sonore 4 telle qu'un haut-parleur ;
- une interface de communication sans fil 5 (par exemple cellulaire, WLAN Bluetooth, etc.) ;
- une interface de saisie 35 tel qu'un clavier ou encore une interface tactile comprise par exemple dans l'interface de diffusion d'une information visuelle 3, et
- un capteur biométrique (34) notamment un capteur biométrique multispectral de peau 34 dans ce mode de réalisation, un tel capteur 34 comprenant au moins un capteur photographique 36, au moins une source d'éclairage multispectral 37 et au moins un capteur d'image thermique 38, la source d'éclairage 37 pouvant émettre un rayonnement lumineux dans des longueurs d'ondes comprises entre 300 et 1100 nm, de plus cette source d'éclairage 37 peut être du type laser.

Dans ce système 1, l'unité de traitement 2 est reliée entre autres aux interfaces de diffusion d'une information visuelle et sonore 3, 4, à l'interface de saisie 35 ainsi qu'à l'interface de communication sans fil 5 et au capteur biométrique multispectral 34. On notera en complément que le capteur biométrique multispectral 34 est agencé dans le corps du dispositif électronique 100 et/ou dans l'élément d'attache.

Ce système 1 implémenté dans le dispositif électronique 100 est apte à assurer le contrôle de l'identité du porteur authentifié de la montre de manière discrète c'est-à-dire sans intervention/interaction directe du porteur avec cette montre 100, afin qu'il puisse utiliser les fonctions de la montre 100 tout le temps qu'il la porte et ce, sans avoir à s'authentifier de nouveau. L'identification du porteur est alors effectuée de manière transparente et discrète et ce, à partir d'au moins un élément d'information biométrique compris dans la peau de ce porteur tel que le réseau vasculaire de la peau ou encore la texture de cette peau. Cette peau du porteur qui recouvre son corps a une particularité, moins évidente à envisager par l'homme de l'art car non visualisable naturellement par l'œil humain, liée aux caractéristiques d'absorption et de réflexion à différentes longueurs d'onde (spectre) des composantes de la peau, situées à différentes profondeurs. Dans un modèle simplifié, la peau est constituée d'une couche nommée « épiderme », semi transparente et située en surface puis, sous l'épiderme, d'une couche nommée le « derme » et comprenant, entre autres, les vaisseaux sanguins (ou réseau vasculaire) dans lesquels l'hémoglobine est fortement réfléchissante aux longueurs d'onde élevées proches du rouge en étant comprises par exemple entre 760 et 930 nm ce qui permet ici de révéler ou mettre en évidence le réseau vasculaire de la peau du porteur. En d'autres termes, le spectre d'absorption lumineux des composantes de l'épiderme et du derme constituant la peau n'étant pas uniforme selon les longueurs d'ondes électromagnétiques, l'apparence et la couleur de la peau résultent d'une combinaison complexe de ces phénomènes. Ainsi, lorsqu'il s'agit de mettre en évidence ou de révéler un élément d'information biométrique comme la texture de la peau de ce porteur, texture essentiellement formée de crevasses ou cavités, l'éclairage de la peau peut être alors assuré par une source d"éclairage restreinte aux longueurs d'onde aux alentours du rouge qui tend à faire disparaître le phénomène d'ombres du fond des crevasses. En effet, il se produit un effet de rétro projection par réflexion sur le derme et à travers l'épiderme de ces longueurs d'onde proches du rouge, alors que l'éclairage de la peau par une source de spectre colorimétrique éloigné du rouge, typiquement la bande de longueurs d'onde située entre le violet (400 nm) et jusqu'au jaune-orangé (600 nm), permet au contraire de mettre fortement en contraste ces crevasses de la peau par l'apparition d'ombres au fond de ces crevasses. On notera que l'identification d'un élément d'information biométrique compris dans la peau peut être améliorée par l'utilisation du capteur d'image thermique 38 de préférence sans éclairage. A titre d'exemple, pour la mise en évidence de la texture de la peau notamment lorsque la portion de la peau concernée de ce porteur est pourvue de poils, l'utilisation du capteur d'image thermique 38 permet de révéler les crevasses de cette texture de la peau qui sont généralement plus chaudes que la peau environnante et les poils plus froids que cette peau environnante. Ainsi dans cette configuration les poils peuvent être distingués thermiquement des crevasses de la texture de la peau du fait de cette différence entre leur température respective.

On notera que la capture d'images thermiques peut être réalisée sous un éclairage dans une longueur d'onde donnée selon l'élément d'information biométrique qu'il convient de mettre en évidence ou de révéler.

On comprend donc, selon le principe de l'invention, que l'identification périodique du porteur est réalisée à partir d'au moins un élément d'information biométrique compris dans des images d'une portion de peau de ce porteur qui peut être éclairée le cas échéant selon différentes longueur d'onde afin de capturer des images comprenant l'élément d'information biométrique recherché. Ainsi, cet élément d'information biométrique, compris dans ces images, peut être mis en évidence par l'éclairage effectué dans différentes longueurs d'onde ou sans éclairage par exemple lorsqu'il s'agit de réaliser une capture d'images thermiques.

Dans ce système 1, les éléments de mémoire 6 de l'unité de traitement 2 comprennent des données relatives à un élément d'identification numérique de référence préalablement défini/généré. Ces éléments de mémoire 6 comportent également des algorithmes de traitement numérique 39 d'images permettant de caractériser au moins un élément d'information biométrique relatif à la peau du porteur et qui est compris dans les images relatives à la portion de peau du porteur. Ces éléments de mémoire 6 comportent aussi des algorithmes de génération 40 de l'élément d'identification numérique de référence mais aussi de l'élément d'identification numérique qui est généré périodiquement dans le cadre du contrôle de l'identité du porteur.

Ces éléments de mémoire 6 de l'unité de traitement 2 comprennent aussi au moins une représentation graphique 41 prévue pour participer au déverrouillage d'un accès aux fonctions de la montre 100. Cette représentation graphique 41 peut par exemple être une image comprenant au moins un objet. A titre d'exemple, cette image définit une scène comprenant une pluralité d'objets tels que des habitations, des véhicules et/ou un astre comme la lune, etc... On comprend bien évidemment que cette image peut définir d'autres types de scène comportant au moins un objet. Ces éléments de mémoire 6 comportent également des données relatives à une séquence de référence 42 comprenant des portions d'identification de référence de cette représentation graphique 41, lesdites portions ayant été préalablement sélectionnées par le porteur de la montre lors de la configuration d'un processus de déverrouillage d'accès aux fonctions de la montre 100.

Un tel système 1 de la montre 100 est apte à mettre en œuvre un procédé de sécurisation d'accès à l'utilisation des fonctions de la montre 100, représenté sur la figure 2. Un tel procédé vise à s'assurer de manière discrète c'est-à-dire de manière non intrusive et automatique de l'identité d'un porteur authentifié afin qu'il puisse utiliser les fonctions de la montre 100 tout le temps qu'il la porte sans avoir à s'authentifier de nouveau. Les fonctions de la montre 100 peuvent concerner le réglage de l'heure, de la date ou encore l'utilisation d'un chronomètre, d'un système de navigation, un podomètre, d'un traceur d'activité, d'une messagerie, un accès à des données confidentielles ou privées propres au porteur et utiles pour accéder à des services personnalisés, etc...

Ce procédé comprend une étape d'authentification 10 du porteur de la montre 100 en vue d'autoriser un accès audites fonctions de cette montre 100. Cette étape 10 permet au porteur d'apporter la preuve de son identité. En effet, le porteur peut interagir avec l'interface de saisie 35 pour une authentification à partir d'un authentifiant ou d'un code secret.

Ce procédé comprend ensuite une étape de contrôle 12 discret à période déterminée de l'identité du porteur de la montre par une vérification de la validité d'un élément d'identification numérique déterminé à partir d'au moins un élément d'information biométrique compris dans une portion de peau de ce porteur de ladite montre en vue de conserver/supprimer l'autorisation d'accès audites fonctions. Lors de cette étape 12, la période déterminée est une période de contrôle régulière ou irrégulière qui peut être configurée automatiquement par l'unité de traitement 2 ou définie par le porteur. A titre d'exemple, cette période peut être de quelques secondes ou quelques minutes. Une telle étape de contrôle 12 permet de vérifier à l'issue de chaque période que le porteur de la montre est toujours le même par le contrôle de son identité « biométrique » à partir d'un élément d'identification numérique établi en fonction d'au moins un élément d'information biométrique compris dans la peau de ce porteur.

Cette étape de contrôle 12 comprend ensuite une sous-étape d'acquisition 13 par le capteur 34 d'une pluralité d'images d'une portion de peau du porteur, ladite peau étant agencée de manière adjacente audit capteur, lesdites images comprenant ledit au moins un élément d'information biométrique compris dans cette portion de peau. Cette sous-étape 13 comprend une phase d'éclairage 14 de la portion de peau selon différentes longueurs d'onde. Plus précisément, lors de cette phase 14, l'unité de traitement 2 pilote le capteur biométrique multispectral 34 et en particulier la source d'éclairage 37 de manière à ce que cette dernière émette un rayonnement lumineux en direction de la portion de peau selon une longueur d'onde précise adaptée à la mise en évidence ou à révéler ledit au moins un élément d'information biométrique spécifique de la peau, ici recherché dans le cadre du contrôle de l'identité du porteur, et qui est compris dans cette portion de la peau du porteur. Une fois l'éclairage configuré, la sous-étape d'acquisition 13 comprend une phase de capture 15 d'images de cette portion de peau éclairée à au moins une longueur d'onde susceptible de mettre en évidence ou de révéler ledit au moins un élément d'information biométrique. Lors de cette phase 15, l'unité de traitement 2 pilote le capteur biométrique multispectral 34 de peau et en particulier le capteur photographique 36 de manière synchrone avec l'activation/désactivation de la source d'éclairage 37 et ce, afin de réaliser une capture d'au moins une image relative à la portion de peau éclairée pour au moins une longueur d'onde.

Cette sous-étape d'acquisition 13 peut comprendre aussi une phase de capture 16 d'au moins une image thermique de la portion de peau. Une telle phase 16 est réalisée de préférence sans éclairage mais dans d'autres alternatives un éclairage de la portion peut être effectué dans au moins une longueur d'onde donnée, cela dépendant évidemment de l'élément d'information biométrique qu'il convient de mettre en évidence ou de révéler. Cette phase 16 peut être réalisée avant ou après les phases d'éclairage 14 et de capture 15 d'images.

L'étape de contrôle 12 comprend ensuite une sous-étape de génération 17 de l'élément d'identification numérique à partir dudit au moins un élément d'information biométrique compris dans les images acquises de la portion de peau. Une telle sous-étape 17 comprend une phase de caractérisation 18 dudit élément d'information biométrique compris dans les images relatives à ladite portion de peau. Lors de cette phase 134, l'unité de traitement 2 met en œuvre des algorithmes de traitement 39 des images acquises visant à identifier/détecter dans chacune d'entre elles ledit au moins un élément d'information biométrique qu'elles comprennent. Ainsi que nous l'avons déjà évoqué précédemment, il peut s'agir d'éléments d'information relatifs par exemple à la texture de la peau ou au réseau vasculaire compris dans cette portion de peau du porteur. La mise en œuvre de ces algorithmes 39, 40 par l'unité de traitement 2 peut à titre d'exemple prévoir un processus de découpe en segments de ces images. On comprend ici que chaque image acquise donne une vue globale de la portion de la peau du porteur, et comporte alors des zones de pertinence variables pour l'identification dudit au moins un élément d'information biométrique. Un tel processus de découpe participe à extraire les segments à traiter et à éliminer les parties à ne pas traiter dans ces images. Ces algorithmes 39 peuvent ensuite prévoir un indexage de ces segments d'image comprenant des caractéristiques relatives audit au moins un élément d'information biométrique particulier à identifier, par zones de localisation dans la portion de peau et ce, afin de pouvoir affecter à chaque zone le traitement adéquat vis-à-vis de la typologie morphologique de la caractéristique de cette zone géographique de la portion. Dans ce contexte, ces algorithmes 39 traitent chaque segment de ces images en mettant en évidence les informations portées par les pixels de chacune de ces images par la réalisation d'opérations d'analyse d'image de type traitements, transformations et détections. Par la suite, ces algorithmes 39 effectuent des opérations de filtrage et d'extraction de caractéristiques ou de vectorisation, afin de convertir les données images relatives audit au moins un élément d'information biométrique identifié et extrait, en des données paramétriques, typiquement des valeurs numériques relatives exprimées par exemple en indice ou en pourcentage.

On comprend ici que l'acquisition de plusieurs images représentant la même portion de peau, participe à améliorer la précision et l'efficacité de cette phase de caractérisation 18.

Par la suite, la sous-étape de génération 16 comprend une phase de conception 19 de l'élément d'identification numérique à partir de la caractérisation dudit au moins un élément d'information biométrique. Lors de cette phase 19, l'unité de traitement 2 met en œuvre des algorithmes de génération 40 d'un tel élément d'identification numérique spécifiquement prévus pour le traitement des données paramétriques obtenues lors de la phase de caractérisation 18, lesquelles données paramétriques étant relatives à l'élément d'information biométrique.

Ensuite, l'étape de contrôle 12 comprend une sous-étape de validation 20 de l'élément d'identification numérique généré en prévision d'un contrôle de l'identité du porteur. Cette sous-étape de validation 20 comprend une phase de comparaison 21, mise en œuvre par l'unité de traitement 2, entre l'élément d'identification numérique généré et l'élément d'identification numérique de référence. Dans ce procédé, l'élément d'identification numérique de référence peut être créé, dès lors que le porteur a été dûment authentifié et que son identité est certaine et ce, lors d'une étape de définition 11 de cet élément d'identification numérique de référence prévoyant des sous-étapes similaires aux sous-étapes de d'acquisition 13 et de génération 17 mises en œuvre durant l'étape de contrôle 12. Dans ce procédé, une fois que le porteur de la montre 100 est authentifié, l'unité de traitement 2 met en œuvre cette étape de définition 11 et effectue ensuite un archivage de l'élément d'identification numérique de référence obtenu dans les éléments de mémoire 6 de l'unité de traitement 2. Cet élément d'identification numérique de référence peut donc être déterminé automatiquement par l'unité de traitement 2 ou configuré par le porteur durant un processus de réglage visant à guider le porteur dans la définition de cet élément d'identification numérique de référence.

La phase de comparaison 21 comprend aussi une sous-phase de conservation 22 de l'autorisation d'accès audites fonctions de la montre 100 si l'élément d'identification numérique généré est sensiblement similaire ou similaire à l'élément d'identification numérique de référence. Dans ce cas, l'unité de contrôle 2 exécute de nouveau, selon la période déterminée, les sous-étapes d'acquisition 13 et de génération 17 de l"étape de contrôle 12 afin de réaliser une autre fois la phase de comparaison 21.

A l'inverse, cette phase de comparaison 21 comprend une sous-phase de suppression 23 de l'autorisation d'accès audites fonctions de la montre 100 si l'élément d'identification numérique généré est sensiblement différent ou différent de l'élément d'identification numérique de référence. Dans ce cas de figure, l'accès aux fonctions de la montre 100 est alors supprimé car le porteur et propriétaire de la montre 100 peut ne plus être en sa possession. Dès lors dans ce contexte, cette sous-phase 23 prévoit alors un verrouillage d'accès aux fonctions de cette montre. Ainsi pour utiliser de nouveau les fonctions de la montre 100, il est nécessaire de déverrouiller cet accès.

Pour ce faire, le procédé comprend une étape de déverrouillage 24 de l'accès aux fonctions de la montre 100 dès lors que cet accès a été verrouillé à la suite d'une vérification de l'élément d'identification numérique mettant en évidence son invalidité.

Cette étape 24 comprend une sous-étape de présentation 25 d'une représentation graphique 41 sur l'interface de diffusion d'une information visuelle 3 de ladite montre 100. Cette sous-étape 25 comporte une phase de génération 26 de l'affichage, sur/dans l'interface de diffusion d'une information visuelle 3, de la représentation graphique 41 prévue pour la mise en œuvre de ce déverrouillage d'accès aux fonctions de la montre 100. Cette phase 26 peut comprendre une sous-phase de sélection par le porteur parmi un échantillon d'au moins deux représentations graphiques affichés sur l'interface de diffusion d'une information visuelle 3, de la représentation graphique 41prévue pour la mise en œuvre de ce déverrouillage. On notera que le porteur est le seul à connaitre la représentation graphique 41 qu'il a choisi lors de la configuration du processus de déverrouillage d'accès aux fonctions de la montre 100.

Cette sous-étape de présentation 25 comprend ensuite une phase de déclenchement 27 d'un compte à rebours dès lors que la phase de génération 26 est réalisée. Autrement dit, le compte à rebours préconfigurable, est déclenché une fois la représentation graphique 41 est présentée sur l'interface de diffusion 3. Une telle phase 27 participe à partir d'un intervalle de temps limité défini par ce compte à rebours, à décompter le temps estimé nécessaire à la saisie de la séquence de portions d'identification de la représentation graphique 41 affichée sur/dans sur l'interface de diffusion 3.

Par la suite, l'étape de déverrouillage 24 comprend une sous-étape de sélection 28 dans l'intervalle de temps limité d'une séquence d'au moins deux portions d'identification de ladite représentation graphique 41 visant à identifier ledit porteur, ladite séquence correspondant à un code d'identification du porteur. De telles portions d'identification ne sont pas directement visibles dans la représentation graphique 41 présentée sur/dans l'interface de diffusion 3. Selon l'invention revendiquée, la sous-étape de sélection 28 comprend une phase de visualisation 29 d'au moins une desdites portions d'identification de la séquence dans ladite représentation graphique 41. Cette phase de visualisation 29 comprend une sous-phase de sélection d'au moins une zone d'intérêt de la représentation graphique 41 susceptible de comprendre ladite au moins une portion d'identification. Lors de cette sous-phase, le porteur sélectionne par exemple une première zone d'intérêt ou une deuxième zone d'intérêt en effectuant un agrandissement de cette première zone ou cette deuxième zone à partir de l'interface de saisie 35. Une fois cette première ou deuxième zone d'intérêt sélectionnée les portions d'identification deviennent alors visibles. Dans cette configuration, chaque portion d'identification utile pour la réalisation/constitution de la séquence peut être sélectionnée à partir de l'interface de saisie 35.

**Il** convient de remarquer que la séquence comprend un nombre ordonné de portions d'identification et que la zone d'intérêt sélectionnée peut comprendre par exemple trois portions d'identification dont seulement deux sont ordonnées successivement l'une après l'autre dans la séquence. Dans ce contexte, la portion d'identification restante requiert pour faire partie de la séquence, la sélection d'une portion d'identification comprise dans une autre zone d'intérêt de la représentation graphique 41.

Ensuite, l'étape de déverrouillage 24 comprend une sous-étape de validation 30 de la séquence sélectionnée. Cette sous-étape de validation 30 comprend une phase de contrôle 31 que la sélection de la séquence de portions d'identification a été réalisée dans l'intervalle de temps limité défini par le compte à rebours. Dans la mesure où cette sélection a été réalisée dans cet intervalle de temps limité, la sous-étape de validation 30 comprend alors une phase de comparaison 32, mise en œuvre par l'unité de traitement 2, entre ladite séquence sélectionnée et la séquence de référence 42. Cette phase de comparaison 32 comprend une sous-phase d'interdiction d'accès aux fonctions de la montre 100 si ladite séquence est sensiblement différente ou différente de la séquence de référence 42. A l'inverse, cette phase de comparaison 32 comprend une sous-phase d'autorisation d'accès aux fonctions de la montre 100 si ladite séquence est sensiblement similaire ou similaire à la séquence de référence 42.

Dans la mesure où cette sélection n'a pas été réalisée dans l'intervalle de temps limité, la sous-étape de validation 30 comprend une phase de renouvellement 33 des sous-étapes de présentation 25 et de sélection 28. Si par la suite, la sélection de la séquence n'a de nouveau pas été réalisée dans l'intervalle de temps limité, la sous-étape de validation 30 prévoit alors une sous-étape de blocage aux fonctions de la montre 100 durant un temps donné ou encore de manière définitive.

## Revendications

1. Procédé de gestion de l'utilisation des fonctions d'une montre (100) comportant :
- une étape d'authentification (10) du porteur de la montre (100) en vue d'autoriser un accès audites fonctions, et
- une étape de contrôle (12) à période déterminée de l'identité du porteur de la montre par une vérification de la validité d'un élément d'identification numérique déterminé à partir d'au moins un élément d'information biométrique du porteur de ladite montre en vue de conserver l'accès audites fonctions, **caractérisée en ce que** ledit procédé comprend:
- une étape de déverrouillage (24) d'un accès aux dites fonctions de la montre (100) dès lors que cet accès a été verrouillé à la suite d'une vérification de l'élément d'identification numérique mettant en évidence son invalidité, ladite étape comprenant les sous-étapes suivantes :
• présentation (25) d'une représentation graphique (41) sur une interface de diffusion d'une information visuelle (3) de ladite montre (100) ;
• sélection (28) dans un intervalle de temps limité d'une séquence d'au moins deux portions d'identification comprises dans ladite représentation graphique (41) visant à identifier ledit porteur, ladite séquence correspondant à un code d'identification du porteur, et
• validation (30) de la séquence sélectionnée, ledit au moins un élément d'information biométrique étant compris dans une portion de peau du porteur et l'étape de contrôle (12) comprenant une sous-étape d'acquisition (13) par au moins un capteur biométrique multispectral de peau (34) compris dans la montre (100), d'une pluralité d'images d'une portion de peau du porteur adjacente audit capteur (34), un tel capteur (34) comprenant au moins un capteur photographique (36), au moins une source d'éclairage multispectral (37) et au moins un capteur d'image thermique (38), la source d'éclairage (37) pouvant émettre un rayonnement lumineux dans des longueurs d'ondes comprises entre 300 et 1100 nm, de plus cette source d'éclairage (37) étant du type laser, et lesdites images comprenant ledit au moins un élément d'information biométrique compris dans cette portion de peau, et **en ce que** la sous-étape de sélection (28) comprend une phase de visualisation (29) d'au moins une desdites portions d'identification de la séquence dans ladite représentation graphique (41) comprenant une sous-phase de sélection d'au moins une zone d'intérêt de la représentation graphique (41) comprenant ladite au moins une portion d'identification, lors de la réalisation de cette sous-phase, le porteur sélectionne une première zone d'intérêt ou une deuxième zone d'intérêt en effectuant un agrandissement de cette première zone ou cette deuxième zone à partir d'une interface de saisie (35) de la montre, une fois cette première ou deuxième zone d'intérêt sélectionnée les portions d'identification deviennent alors visibles.

2. Procédé selon la revendication précédente, **caractérisé en ce que** la sous-étape de sélection comprend une phase de visualisation (29) d'au moins une desdites portions d'identification de la séquence dans ladite représentation graphique (41).

3. Procédé selon l'une quelconque des revendications précédentes, **caractérisé en ce que** la sous-étape de validation comprend une phase de comparaison entre ladite séquence sélectionnée et une séquence de référence (42).

4. Procédé selon l'une quelconque des revendications précédentes, **caractérisé en ce que** l'étape de contrôle (12) comprend une sous-étape de génération (17) d'un élément d'identification numérique à partir dudit au moins un élément d'information biométrique.

5. Procédé selon l'une quelconque des revendications précédentes, **caractérisé en ce que** l'étape de contrôle (12) comprend une sous-étape de validation (20) d'un élément d'identification numérique généré en prévision du contrôle de l'identité du porteur.

6. Procédé selon la revendication précédente, **caractérisé en ce que** la sous-étape de validation (20) comprend une phase de comparaison (21) comportant une sous-phase de conservation (23) de l'autorisation d'accès audites fonctions de la montre si l'élément d'identification numérique généré est sensiblement similaire ou similaire à un élément d'identification numérique de référence.

7. Procédé selon l'une quelconque des revendications précédentes, **caractérisé en ce que** la sous-étape d'acquisition (13) comprend une phase d'éclairage (14) de la portion de peau selon différentes longueurs d'onde.

8. Procédé selon l'une quelconque des revendications précédentes, **caractérisé en ce que** la sous-étape d'acquisition (13) comprend une phase de capture (15) d'images de la portion de peau éclairée à différentes longueurs d'onde.

9. Procédé selon l'une quelconque des revendications précédentes, **caractérisé en ce que** la sous-étape de génération (17) comprend une phase de caractérisation (18) dudit au moins un élément d'information biométrique compris dans les images acquises relatives à ladite portion de peau.

10. Procédé selon l'une quelconque des revendications précédentes, **caractérisé en ce que** la sous-étape de génération (17) comprend une phase de conception (19) de l'élément d'identification numérique à partir de la caractérisation dudit élément d'information biométrique.

11. Procédé selon l'une quelconque des revendications précédentes, **caractérisé en ce que** l'élément d'information biométrique est relatif à un réseau vasculaire ou à une texture de cette peau.

12. Système de gestion de l'utilisation des fonctions d'une montre (100) mettant en œuvre le procédé selon l'une quelconque des revendications précédentes, le système (1) comprenant les éléments suivants reliés entre eux : une unité de traitement (2), un capteur biométrique multispectral de peau (34), une interface de saisie (35) et une interface de diffusion d'une information visuelle (3). 14.

13. Montre (100), notamment une montre (100) mécanique connectée, comportant un système (1) selon la revendication 12.

14. Programme d'ordinateur comprenant des instructions de code de programme pour l'exécution des étapes (10 à 33) du procédé selon l'une quelconque des revendications 1 à 11, lorsque ledit programme est exécuté par l'unité de traitement (2) dudit système (1) dans la montre (100).

## Patentansprüche

1. Verfahren zur Steuerung der Nutzung der Funktionen einer Uhr (100), umfassend:
- einen Authentifizierungsschritt (10) des Trägers der Uhr (100), um den Zugriff auf die genannten Funktionen zu autorisieren, und
- einen in festgelegten Intervallen durchgeführten Kontrollschritt (12) zur Überprüfung der Identität des Uhrenträgers durch Validierung eines digitalen Identifizierungselements, das anhand von mindestens einem biometrischen Informationselement des Trägers der betreffenden Uhr bestimmt wird, um den Zugang zu den genannten Funktionen aufrechtzuerhalten, wobei das Verfahren Folgendes umfasst:
- einen Entsperrschritt (24) für den Zugang zu den genannten Funktionen der Uhr (100), sobald dieser Zugang infolge einer Überprüfung des digitalen Identifizierungselements, bei der dessen Ungültigkeit festgestellt wurde, gesperrt wurde, wobei dieser Schritt die folgenden Unterschritte umfasst:
• Darstellung (25) einer grafischen Repräsentation (41) auf einer visuellen Informationsanzeige (3) der genannten Uhr (100);
Auswahl (28) einer Sequenz aus mindestens zwei Identifikationsabschnitten innerhalb der grafischen Repräsentation (41) in einem begrenzten Zeitfenster zur Identifizierung des genannten Trägers, wobei die Sequenz einem Identifizierungscode des Trägers entspricht, und
Validierung (30) der ausgewählten Sequenz,
wobei mindestens ein biometrisches Informationselement in einem Hautbereich des Trägers enthalten ist, und der Kontrollschritt (12) einen Unterschritt zur Erfassung (13) durch mindestens einen multispektralen biometrischen Hautsensor (34) der Uhr (100) umfasst, bei dem eine Vielzahl von Bildern eines Hautbereichs des Trägers aufgenommen wird, der dem Sensor (34) anliegt. Ein solcher Sensor (34) umfasst mindestens einen fotografischen Sensor (36), mindestens eine multispektrale Lichtquelle (37) sowie mindestens einen thermischen Bildsensor (38). Die Lichtquelle (37) kann Licht mit Wellenlängen zwischen 300 und 1100 nm emittieren, wobei diese Lichtquelle (37) vom Typ Laser ist. Die genannten Bilder enthalten das mindestens eine biometrische Informationselement in dem entsprechenden Hautbereich. Zudem umfasst der Unterschritt der Auswahl (28) eine Visualisierungsphase (29), in der mindestens einer der genannten Identifikationsabschnitte der Sequenz innerhalb der grafischen Repräsentation (41) dargestellt wird. Diese Phase beinhaltet eine Unterphase zur Auswahl mindestens eines Interessenzonenbereichs der grafischen Repräsentation (41), der den genannten Identifikationsabschnitt umfasst. Während dieser Unterphase wählt der Träger eine erste oder eine zweite Interessenzone aus, indem er diese Zone über eine Eingabeschnittstelle (35) der Uhr vergrößert. Nach Auswahl der ersten oder zweiten Interessenzone werden die Identifikationsabschnitte sichtbar.

2. Verfahren nach dem vorhergehenden Anspruch, **dadurch gekennzeichnet, dass** der Unterschritt der Auswahl eine Visualisierungsphase (29) von mindestens einem der genannten Identifikationsabschnitte der Sequenz innerhalb der grafischen Darstellung (41) umfasst.

3. Verfahren nach einem der vorhergehenden Ansprüche, **dadurch gekennzeichnet, dass** der Unterschritt der Validierung eine Vergleichsphase zwischen der ausgewählten Sequenz und einer Referenzsequenz (42) umfasst.

4. Verfahren nach einem der vorhergehenden Ansprüche, **dadurch gekennzeichnet, dass** der Kontrollschritt (12) einen Unterschritt zur Generierung (17) eines digitalen Identifizierungselements auf der Grundlage von mindestens einem biometrischen Informationselement umfasst.

5. Verfahren nach einem der vorhergehenden Ansprüche, **dadurch gekennzeichnet, dass** der Kontrollschritt (12) einen Unterschritt zur Validierung (20) eines digitalen Identifizierungselements umfasst, das im Vorfeld der Identitätsprüfung des Trägers erzeugt wurde.

6. Verfahren nach dem vorhergehenden Anspruch, **dadurch gekennzeichnet, dass** der Unterschritt der Validierung (20) eine Vergleichsphase (21) umfasst, die eine Unterphase zur Aufrechterhaltung (23) der Zugangsberechtigung zu den genannten Uhrenfunktionen beinhaltet, sofern das generierte digitale Identifizierungselement dem digitalen Referenz-Identifizierungselement gleich oder im Wesentlichen gleich ist.

7. Verfahren nach einem der vorhergehenden Ansprüche, **dadurch gekennzeichnet, dass** der Unterschritt der Erfassung (13) eine Beleuchtungsphase (14) eines Hautbereichs mit unterschiedlichen Wellenlängen umfasst.

8. Verfahren nach einem der vorhergehenden Ansprüche, **dadurch gekennzeichnet, dass** der Unterschritt der Erfassung (13) eine Aufnahmep hase (15) von Bildern des Hautbereichs umfasst, der mit unterschiedlichen Wellenlängen beleuchtet wurde.

9. Verfahren nach einem der vorhergehenden Ansprüche, **dadurch gekennzeichnet, dass** der Unterschritt der Generierung (17) eine Charakterisierungsphase (18) des mindestens einen biometrischen Informationselements umfasst, das in den erfassten Bildern des genannten Hautbereichs enthalten ist.

10. Verfahren nach einem der vorhergehenden Ansprüche, **dadurch gekennzeichnet, dass** der Unterschritt der Generierung (17) eine Auslegungsphase (19) des digitalen Identifizierungselements auf Grundlage der Charakterisierung des genannten biometrischen Informationselements umfasst.

11. Verfahren nach einem der vorhergehenden Ansprüche, **dadurch gekennzeichnet, dass** sich das biometrische Informationselement auf ein Gefäßnetzwerk oder eine Textur des betreffenden Hautbereichs bezieht.

12. System zur Steuerung der Nutzung der Funktionen einer Uhr (100), welches das Verfahren nach einem der vorhergehenden Ansprüche implementiert, wobei das System (1) die folgenden miteinander verbundenen Komponenten umfasst: eine Verarbeitungseinheit (2), einen multispektralen biometrischen Hautsensor (34), eine Eingabeschnittstelle (35) und eine Schnittstelle zur Anzeige visueller Informationen (3).

13. Uhr (100), insbesondere eine vernetzte mechanische Uhr (100), die ein System (1) gemäß Anspruch 12 aufweist.

14. Computerprogramm mit Programmcodes zur Ausführung der Schritte (10 bis 33) des Verfahrens nach einem der Ansprüche 1 bis 11, wenn das Programm von der Verarbeitungseinheit (2) des genannten Systems (1) in der Uhr (100) ausgeführt wird.

## Claims

1. A method for managing the use of the functions of a watch (100) including:
- a step (10) of authenticating the wearer of the watch (100) in order to authorise access to said functions, and
- a step (12) of controlling the identity of the wearer of the watch at a determined period by verifying the validity of a digital identification element determined from at least one biometric information element of the wearer of said watch in order to maintain access to said functions, characterised int that said method comprised:
- a step (24) of unlocking access to said functions of the watch (100) when this access has been locked following a verification of the digital identification element showing its invalidity, said step comprising the following sub-steps:
• presentation (25) of a graphic representation (41) on an interface (3) for broadcasting a visual piece of information of said watch (100);
• selection (28) within a limited time interval of a sequence of at least two identification portions comprised in said graphic representation (41) aiming at identifying said wearer, said sequence corresponding to an identification code of the wearer, and
• validation (30) of the selected sequence,
• said at least one biometric information element being comprised in a portion of the wearer's skin and the control step (12) comprising a sub-step (13) of acquiring by at least one multispectral biometric skin sensor (34) comprised in the watch (100), a plurality of images of a portion of the wearer's skin adjacent to said sensor (34), such a sensor (34) comprising at least one photographic sensor (36), at least one multispectral illumination source (37) and at least one thermal image sensor (38), the illumination source (37) being able to emit light radiation in wavelengths comprised between 300 and 1100 nm, in addition this illumination source (37) can be of the laser type, and said images comprising said at least one biometric information element comprised in this skin portion, and in that the selection sub-step (28) comprises a phase (29) of visualising at least one of said identification portions of the sequence in said graphic representation (41) comprising a sub-phase of selecting at least one area of interest of the graphic representation (41) comprising said at least one identification portion, during this sub-phase, the wearer selects a first area of interest or a second area of interest by carrying out an enlargement of this first area or this second area from the input interface (35) of the watch, once this first or second area of interest is selected, the identification portions then become visible.

2. The method according to the preceding claim, **characterised in that** the selection sub-step comprises a phase (29) of visualising at least one of said identification portions of the sequence in said graphic representation (41).

3. The method according to any one of the preceding claims, **characterised in that** the validation sub-step comprises a phase of comparison between said selected sequence and a reference sequence (42).

4. The method according to any one of the preceding claims, **characterised in that** the control step (12) comprises a sub-step (17) of generating a digital identification element from said at least one biometric information element.

5. The method according to any one of the preceding claims, **characterised in that** the control step (12) comprises a sub-step (20) of validating a digital identification element generated in anticipation of the control of the identity of the wearer.

6. The method according to the preceding claim, **characterised in that** the validation sub-step (20) comprises a comparison phase (21) including a sub-phase (23) of maintaining the authorisation to access said functions of the watch if the generated digital identification element is substantially similar or similar to a reference digital identification element.

7. The method according to any one of the preceding claims, **characterised in that** the acquisition sub-step (13) comprises a phase (14) of illuminating the skin portion according to different wavelengths.

8. The method according to any one of the preceding claims, **characterised in that** the acquisition sub-step (13) comprises a phase (15) of capturing images of the skin portion illuminated at different wavelengths.

9. The method according to any one of the preceding claims, **characterised in that** the generation sub-step (17) comprises a phase (18) of characterising said at least one biometric information element comprised in the acquired images relating to said skin portion.

10. The method according to any one of the preceding claims, **characterised in that** the generation sub-step (17) comprises a phase (19) of designing the digital identification element from the characterisation of said biometric information element.

11. The method according to any one of the preceding claims, **characterised in that** the biometric information element relates to a vascular network or to a texture of this skin.

12. A system for managing the use of the functions of a watch (100) implementing the method according to any one of the preceding claims, the system (1) comprising the following elements connected together: a processing unit (2), a multispectral biometric skin sensor (34), an input interface (35) and an interface for broadcasting a visual piece of information (3).

13. A watch (100), in particular a connected mechanical watch (100), including a system (1) according to claim 12.

14. A computer program comprising program code instructions for executing the steps (10 to 33) of the method according to any one of claims 1 to 11 when said program is executed by the processing unit (2) of said watch (100).
